# EUROPÄISCHE PATENTSCHRIFT

(11) **EP 2 460 617 B1**
(45) Veröffentlichungstag und Bekanntmachung des Hinweises auf die Patenterteilung: **10.01.2018**
(21) Anmeldenummer: 11008810.1
(22) Anmeldetag: 05.11.2011
(51) Int. Cl.: B21K 1/12, C21D 8/00, C21D 9/00, B23P 15/00, B21J 5/08, B21J 9/08

(54) **Verfahren zur Herstellung einer Gewindespindel mit grossem Lagersitz**
Method for producing a spindle with large bearing seat
Procédé de fabrication d'une broche filetée dotée d'un grand palier

(30) Priorität: 01.12.2010 DE 102010053119
(43) Veröffentlichungstag der Anmeldung: 06.06.2012
(73) Patentinhaber: Robert Bosch GmbH, 70469 Stuttgart (DE)
(72) Erfinder: Greubel, Roland, 97729 Ramsthal (DE)
(74) Vertreter: Maiß, Harald

(56) Entgegenhaltungen:
- EP-A1- 0 157 894
- EP-A1- 1 046 440
- JP-A- 60 009 543
- JP-A- 60 238 056
- JP-A- 2000 237 837
- US-A- 3 198 926

## Beschreibung

Die Erfindung betrifft ein Verfahren zur Herstellung einer Gewindespindel.
Aus der DE 102 06 744 B4 ist bekannt, eine Gewindespindel im Gewinderollverfahren herzustellen. Dabei wird ein sich in eine Längsrichtung erstreckender Rohling an seiner Außenumfangsfläche im Wesentlichen über seine gesamte Länge mit wenigstens einer schraubenförmigen Nut versehen, in der beispielsweise die Kugeln eines Kugelgewindetriebs laufen. Nach dem Gewinderollen werden die Rohlinge typischerweise Span abhebend bearbeitet, um an den Enden Lagersitze für Radialwälzlager oder Antriebszapfen zum Anschluss von Elektromotoren oder Getrieben herzustellen.
Der Durchmesser der genannten Lagersitze und Antriebszapfen ist durch den Kerndurchmesser der schraubenförmigen Nut nach oben begrenzt. Dabei kann es vorkommen, dass der so erreichbare Durchmesser der Radialwälzlager bzw. der Antriebszapfen nicht ausreicht, um die im Betrieb auftretenden Lasten dauerhaft zu übertragen. Zur Lösung dieses Problems ist aus der US 5 199 169 A bekannt, eine gesonderte Hülse mit der schraubenförmigen Nut des Rohlings zu verkleben. Die genannte Hülse kann mit einem beliebig großen Durchmesser ausgeführt werden, so dass das oben angesprochene Tragfähigkeitsproblem nicht mehr besteht. Da die Länge der Klebeverbindung beliebig groß gewählt werden kann ist auch sichergestellt, dass die Klebeverbindung eine genügend große Tragfähigkeit aufweist. Alternativ zum genannten Kleben ist auch bekannt, ein gesondertes Bauteil mittels Reibschweißen an dem gerollten Spindelrohling zu befestigen.

Aus der EP 1 046 440 A1 ist ein Verfahren zur Herstellung von rotationssymmetrischen Bauteilen bekannt. Dabei wird das stangenförmige Rohteil partiell über die Rekristallisationstemperatur erwärmt, wobei es in Längsrichtung gestaucht wird. Dabei findet eine simultane Warm- und Kaltumformung des Bauteiles statt, die bewirkt, dass sich der gesamt mittlere Bereich des Bauteils plastisch nach radial außen verformt, wobei im erwärmten Bereich ein besonders große plastische Verformung auftritt, um einen Flansch auszuformen. Der radiale Fließweg des Werkstoffes wird dabei durch eine Matrize begrenzt.

Die Aufgabe der Erfindung besteht darin, ein kostengünstigeres Verfahren bereitzustellen, um insbesondere gerollte Gewindespindeln mit einem großen Lagersitz bzw. einem großen Antriebszapfen o. ä. bereitzustellen.

Diese Aufgabe wird durch das Verfahren gemäß dem selbständigen Anspruch gelöst. Der Erfindung liegt die Idee zugrunde, den Rohling durch plastische Umformung im Bereich des Lagersitzes bzw. des Antriebszapfens im Durchmesser zu vergrößern und anschließend Span abhebend auf die gewünschte Endform zu bringen. Damit ist es nicht mehr notwendig, ein gesondertes Bauteil für den Lagersitz bzw. den Antriebszapfen bereitzustellen, so dass die Herstellkosten der Gewindespindel sinken.

Bei der genannten plastischen Umformung ist zu berücksichtigen, dass die schraubenförmige Nut, die insbesondere bei Kugelgewindetrieben eine hohe Genauigkeit aufweist, nicht plastisch verformt wird. Dabei wird ausgenutzt, dass Stahl bei hohen Temperaturen erheblich leichter verformbar ist als bei Umgebungstemperatur. Hierbei ist insbesondere an Schmiedetemperaturen in der Größenordnung von etwa 1100 °C gedacht, bei der sich auf der Stahloberfläche gerade noch keine Zunder- bzw. Oxidschicht bildet. Die genannte Temperatur bildet dabei die Maximaltemperatur, die insbesondere an der Rohlingsoberfläche nicht überschritten werden soll. Es ist klar, dass der Rohling nicht im ganzen ersten Längsbereich gleichmäßig auf diese Temperatur erwärmt werden kann, insbesondere nicht im Übergangsbereich zu den nicht erwärmten Längsbereichen des Rohlings.

Mit Hilfe des ersten und des zweiten Anschlages wird die Länge des Rohlings verkürzt, so dass dieser sich im erwärmten ersten Längsbereich zwangsweise aufwölbt, wodurch die gewünschte Durchmesservergrößerung herbeigeführt wird. Durch das Erwärmen wird die für die Umformung im ersten Längsbereich erforderliche Längskraft so weit herabgesetzt, dass diese nicht mehr ausreicht, um die Längsbereiche des Rohlings, welche Umgebungstemperatur aufweisen, plastisch zu verformen. Die zuletzt genannten Längsbereiche werden daher während des Stauchvorgangs entweder gar nicht oder nur elastisch verformt, so dass deren Verformung vollständig reversibel ist und die Genauigkeit der schraubenförmigen Nut dort nicht beeinträchtigt wird.

In den abhängigen Ansprüchen sind vorteilhafte Weiterbildungen und Verbesserungen der Erfindung angegeben.

Der erste Längsbereich kann beabstandet zu dem ersten und dem zweiten Anschlag angeordnet sein. Hierdurch soll erreicht werden, dass der Rohling im Bereich des ersten und des zweiten Anschlages eine Temperatur aufweist, die erheblich unter der Maximaltemperatur des Rohlings und idealerweise auf Umgebungstemperatur liegt. Damit wird der Rohling im Bereich des ersten und des zweiten Anschlages im Wesentlichen nicht plastisch verformt. In der Folge ist es ausgeschlossen, dass sich der Rohling mit dem ersten oder dem zweiten Anschlag formschlüssig verklemmt, so dass diese Teile nicht mehr voneinander gelöst werden können.

Darüber hinaus wird die erfindungsgemäße plastische Aufwölbung im ersten Längsbereich nicht durch die festen Anschläge behindert. Die Form des Rohlings nach dem Umformen ist damit nur abhängig von der Temperaturverteilung nach dem Aufheizen und der Abstandsänderung des ersten und des zweiten Anschlages. Diese Prozessparameter können mit geringem Aufwand stufenlos verändert werden, so dass der gewünschte vergrößerte Durchmesser der Spindel stufenlos einstellbar ist.

Der erste Längsbereich des Rohlings kann mit einem Wechselstrom induktiv erwärmt werden, der ringförmig um den Rohling herum geführt ist. Die induktive Erwärmung des Rohlings nimmt damit nur einen sehr kurzen Zeitraum in Anspruch, wodurch weitgehend verhindert wird, dass Wärme in die Längsbereiche des Rohlings fließt, die nicht plastisch verformt werden sollen. Darüber hinaus kann durch die Form der elektrischen Leiter, die den genannten Wechselstrom tragen, sehr genau eingestellt werden, wo die Erwärmung stattfinden soll.

Der Wechselstrom besitzt vorzugsweise eine Frequenz zwischen 5 kHz und 50 kHz. Mit dem oberen Grenzwert lässt sich eine sehr schnelle Erwärmung des Rohlings erzielen, wobei mit zunehmendem Durchmesser des Rohlings in dessen Kern keine ausreichend hohe Temperatur erzielt werden kann. In diesem Fall ist die Frequenz ggf. bis zum unteren Grenzwert abzusenken. Der genannte Wechselstrom wird vorzugsweise in einem Kupferdraht geführt, der schraubenförmig bezüglich der Längsrichtung verläuft, wobei er einen genügend großen Abstand zum Rohling aufweist, so dass sicher ausgeschlossen ist, dass er diesen berührt. Der schraubenförmige Kupferdraht wird üblicherweise als Induktor angesprochen.

Der Rohling kann sich während des Erwärmens bezüglich der Längsrichtung drehen. Hierdurch wird erreicht, dass die Temperaturverteilung bezüglich der Längsrichtung rotationssymmetrisch ist. In der Folge ist auch die erfindungsgemäße Aufwölbung rotationssymmetrisch. Da die Span abhebend hergestellte Endform in den weitaus meisten Fällen ebenfalls rotationssymmetrisch ist, wird auf diese Weise unnötiger Verschnitt vermieden. Die plastische Durchmesservergrößerung kann auf das geringst notwendige Maß beschränkt bleiben.

Der Rohling kann während des Erwärmens und/oder des Umformens in Längsrichtung vor und/oder hinter dem ersten Längsbereich gekühlt werden, indem er mit einem Kühlfluid besprüht wird. Die schraubenförmige Nut des Rohlings ist vorzugsweise gehärtet, damit sie beim Betrieb des Gewindetriebs eine hohe Verschleißfestigkeit aufweist. Durch die erfindungsgemäße Erwärmung besteht die Gefahr, dass diese Härte zumindest in der Nähe des ersten Längsbereichs verloren geht. Durch die vorgeschlagene Kühlung wird ein Aufheizen des Stahls über die Anlasstemperatur vermieden, so dass die Härte erhalten bleibt. Weiter wird der Übergangsbereich, in dem der Rohling nicht mehr die volle Schmiedetemperatur aufweist, verkleinert. In diesem Bereich, der ebenfalls plastisch verformt wird, ist die schraubenförmige Nut nicht mehr für den Gewindetrieb nutzbar. Gleichzeitig ist die Verformung nicht groß genug, dass die Durchmesservergrößerung für die Herstellung des Lagersitzes bzw. des Antriebszapfens ausreicht. Der Übergangsbereich vergrößert somit nur die Baulänge des späteren Gewindetriebs, ohne dass damit ein Nutzen verbunden ist.

Bei dem Kühlfluid handelt es sich vorzugsweise um Wasser, Wasser gemischte Polymerlösung oder Öl. Es kann aber auch daran gedacht sein, CO₂ oder andere bei Umgebungstemperatur gasförmige Fluida auf den Rohling zu sprühen. Diese Gase können dabei so stark gekühlt sein, dass sie flüssig sind und während des Kühlvorgangs verdampfen. Hierdurch kann eine besonders hohe Kühlwirkung erzielt werden.

Der Rohling kann während der Relativbewegung des ersten und des zweiten Anschlags bezüglich der Längsrichtung drehfest sein. Damit wirkt nur die Längsbewegung des ersten und des zweiten Anschlags auf den Rohling ein. Unerwünschte Verformungen durch sonstige Bewegungen des Rohlings werden damit vermieden.

Im ersten Längsbereich kann nach der Span abhebenden Bearbeitung ein Rest der schraubenförmigen Nut verbleiben. Damit kann die erforderliche Durchmesservergrößerung und mithin die erforderliche Umformkraft auf ein Mindestmaß beschränkt werden. Hierbei ist anzumerken, dass die maximale Umformkraft durch die Elastizitätsgrenze des Werkstoffs des Rohlings bei Umgebungstemperatur begrenzt ist. Der verbleibende Rest der schraubenförmigen Nut ist für den Lagersitz oder den Antriebszapfen in der Regel nicht schädlich, da dieser im Übrigen eine genügend große tragende Fläche aufweist.

Der Rohling kann im ersten Längsbereich vor dem Abkühlen auf Umgebungstemperatur einer Glühbehandlung unterzogen werden, indem er für einen Zeitraum von 1 s bis 10 s auf eine Temperatur von 750°C bis 800 °C erwärmt wird. Hierdurch soll im ersten Längsbereich ein Werkstoffgefüge eingestellt werden, das eine einfache Span abhebende Bearbeitung ermöglicht. Gleichzeitig soll verhindert werden, dass die Gewindespindel aufgrund von übermäßig harten Stellen bricht. Hierbei ist anzumerken, dass die Gewindespindel vorzugsweise aus einem härtbaren Stahl besteht. Dieser kann bei dem erfindungsgemäßen Umformprozess wenigstens bereichsweise hart werden.

Der Rohling kann sich während der Glühbehandlung bezüglich der Längsrichtung drehen. Damit wird eine rotationssymmetrische Durchwärmung des Rohlings erreicht, so dass das angestrebte Werkstoffgefüge ebenfalls rotationssymmetrisch ausgebildet ist. Fehlstellen werden so vermieden.

Die Glühbehandlung kann mit der gleichen Vorrichtung durchgeführt werden, mit der der Rohling zuvor erwärmt wurde. Auf diese Weise werden die Kosten der Durchführung des erfindungsgemäßen Verfahrens minimiert. Insbesondere eine induktiv arbeitende Erwärmungsvorrichtung ist ohne weiteres geeignet, um beide Temperaturen zu erzeugen. Hierfür reicht es aus, die Stärke bzw. die Frequenz des Wechselstroms, mit dem der Induktor durchflossen wird, passend einzustellen.

Am gleichen Rohling können nacheinander mehrere erfindungsgemäße Verfahren durchgeführt werden, wobei die entsprechenden ersten Längsbereiche in Längsrichtung unmittelbar benachbart angeordnet sind. Hierdurch soll der Durchmesser des Rohlings über einen besonders langen Bereich vergrößert werden. Bei der einmaligen Anwendung des erfindungsgemäßen Verfahrens ergibt sich ein bestimmtes Verhältnis von Durchmesservergrößerung und Länge des ersten Längsbereichs, das nur in gewissen Grenzen einstellbar ist. Durch das vorgeschlagene Verfahren kann eine unnötig hohe Vergrößerung des Durchmessers des Rohlings und mithin übermäßig große Umformkräfte vermieden werden. Hierbei ist anzumerken, dass die maximale Umformkraft durch die Elastizitätsgrenze des kalten Werkstoffs des Rohlings begrenzt ist. Die Span abhebende Bearbeitung auf die Endform wird vorzugsweise einmalig am Ende des Gesamtverfahrens durchgeführt.

Die Erfindung wird im Folgenden anhand der beigefügten Zeichnungen näher erläutert. Es stellt dar:
- Fig. 1: eine grobschematische Seitenansicht einer Vorrichtung zur Durchführung des erfindungsgemäßen Verfahrens;
- Fig. 2: eine grobschematische Seitenansicht des Rohlings nach dem Stauchen im ersten Längsbereich; und
- Fig. 3: eine grobschematische Seitenansicht eines Gewindetriebs mit einer Gewindespindel, die nach dem erfindungsgemäßen Verfahren hergestellt ist.

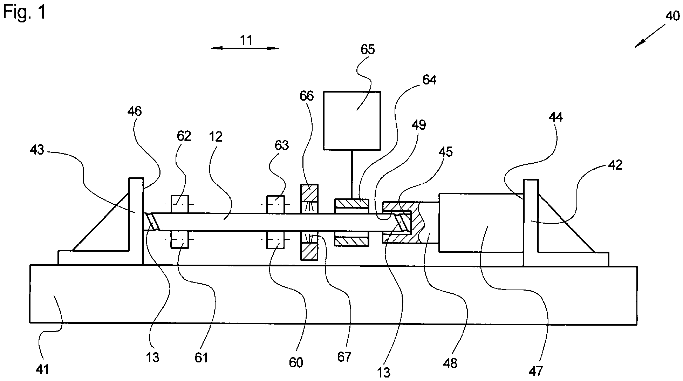

Fig. 1 zeigt eine grobschematische Seitenansicht einer Vorrichtung 40 zur Durchführung des erfindungsgemäßen Verfahrens. Die Vorrichtung 40 umfasst ein massives Grundgestell 41, welches sich parallel zur Längsrichtung 11 des Rohlings 12 erstreckt. Auf dem Grundgestell 41 ist ein erster und ein zweiter identischer Anschlagwinkel 42; 43 in Längsrichtung 11 verstellbar befestigt, so dass die Vorrichtung 40 an unterschiedliche Längen des Rohlings 12 angepasst werden kann. Die ebenen Anschlagflächen 44 der Anschlagwinkel 42; 43 sind senkrecht zur Längsrichtung 11 ausgerichtet und weisen aufeinander zu. An der Anschlagfläche 44 des ersten Anschlagwinkels 42 ist ein Hydraulikzylinder 47 befestigt, dessen Kolbenstange 48 in Längsrichtung 11 verfahrbar ist. Anstelle des Hydraulikzylinders 47 kann auch ein mechanischer Antrieb insbesondere ein Elektrozylinder vorgesehen sein, der beispielsweise mit einem Planentengewindetrieb oder einem Wälzkörpergewindetrieb mit besonders hoher Tragfähigkeit ausgestattet ist. Am vorderen Ende der Kolbenstange 48 ist eine zylindrische Aufnahmeausnehmung 49 vorgesehen. Der Rohling 12 liegt mit einer Stirnfläche an der ebenen Bodenfläche der Aufnahmeausnehmung 49 an, so dass die genannte Bodenfläche den ersten Anschlag 45 bildet. Der Durchmesser der Aufnahmeausnehmung 49 ist geringfügig größer ausgebildet als der Außendurchmesser des Rohlings 12, so dass sich dieser in der Aufnahmeausnehmung frei drehen kann und zwar auch dann, wenn die erfindungsgemäße plastische Verformung abgeschlossen ist.

Der Rohling 12 liegt mit seiner gegenüberliegenden Stirnfläche an der Anschlagfläche 44 des zweiten Anschlagwinkels 43 an, so dass diese den zweiten Anschlag 46 bildet. Durch Ausfahren der Kolbenstange 48 kann somit der Abstand des ersten und des zweiten Anschlags 45; 46 in Längsrichtung 11 verkürzt werden. Alternativ zu den vorgestellten Anschlägen 45; 46, die an den endseitigen Stirnflächen des Rohlings 12 angreifen, können auch Anschläge vorgesehen sein, die in die schraubenförmige Nut 13 des Rohlings 12 eingreifen.

Der Rohling 12 ist quer zur Längsrichtung über eine erste und eine zweite Gruppe von Stützrollen 60; 61 abgestützt, wobei abhängig von der Gesamtlänge des Rohlings weniger oder mehr als zwei Gruppen von Stützrollen vorgesehen sein können. Jede Gruppe von Stützrollen 60; 61 umfasst dabei drei drehbare Rollen, die an der gleichen Längsposition gleichmäßig verteilt über den Umfang des Rohlings 12 angeordnet sind. Wenigstens eine der Stützrollen der ersten Gruppe 60 ist als angetriebene Stützrolle 63 ausgeführt, so dass der Rohling 12 in eine Drehbewegung bezüglich der Längsrichtung 11 versetzt werden kann. Die übrigen Stützrollen sind frei drehbar, wobei deren Drehachse 62 parallel zur Längsrichtung verläuft.

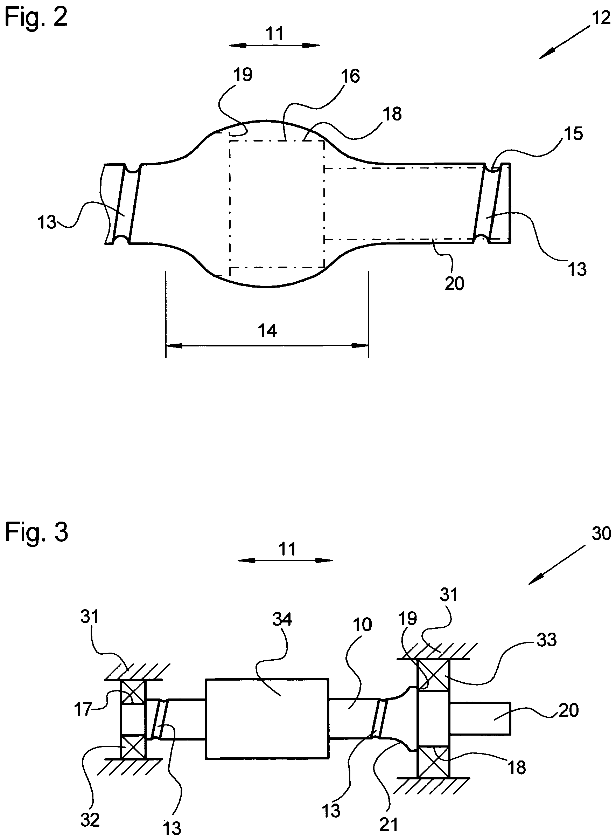

Zwischen der ersten Gruppe von Stützrollen 60 und dem ersten Anschlag 45 ist der Induktor 64 angeordnet. Der Induktor 64 besteht aus einem Kupferdraht mit etwa 5 mm Durchmesser, der schraubenförmig um den Rohling 12 herum verläuft, wobei er diesen nicht berührt, die Enden des genannten Drahtes sind mit einer Wechselstromquelle 65 verbunden, deren Wechselstromfrequenz zwischen 5 kHz und 50 kHz verstellbar ist, wobei die Anordnung aus Wechselstromquelle 65 und Induktor 64 in Längsrichtung 11 verfahrbar ist. Hierdurch kann der Induktor 64 jede gewünschte Stelle des Rohlings erwärmen. Wenn der Induktor 64 während des Erwärmens verfahren wird, kann die Länge des ersten Längsbereichs (Fig. 2; Nr. 14), in dem die Erwärmung stattfinden soll, größer als die Breite des Induktors 64 sein. Darüber hinaus kann der Induktor 64 nach dem Erwärmen aus dem ersten Längsbereich herausgefahren werden, so dass der Induktor die Aufwölbung des ersten Längsbereichs nicht stört. Alternativ dazu kann der Induktor 64 mit einem genügend großen Durchmesser ausgeführt sein, so dass er den aufgewölbten Rohling 12 nicht berührt.

Zwischen dem Induktor 64 und der ersten Gruppe von Stützrollen 60 ist eine Ringbrause 66 angeordnet. Die Ringbrause 66 ist fest mit der Baugruppe bestehend aus dem Induktor 64 und der Wechselstromquelle 65 verbunden, so dass diese zusammen mit dem Induktor 64 in Längsrichtung 11 verfahren werden kann, wobei während dem Erwärmen des Rohlings 12 der Abstand zwischen Ringbrause 66 und Induktor 64 fest vorgegeben ist. Die Ringbrause 66 umgrenzt einen kreisringförmigen Hohlraum, der den Rohling 12 umgibt. An der dem Rohling 12 zugewandten Innenseite der Ringbrause 66 ist eine Vielzahl von Düsen vorgesehen, die gleichmäßig verteilt über den Umfang der Ringbrause 66 angeordnet sind. Das Kühlfluid 67, beispielsweise Wasser, wird dem genannten ringförmigen Hohlraum unter Druck zugeführt und spritzt über die genannten Düsen auf den Rohling 12, so dass dieser gekühlt wird.

Vor dem Einlegen des Rohlings 12 in die Vorrichtung 40 wird der Hydraulikzylinder 47 eingefahren und der Induktor 64 mit der Ringbrause 66 in die dem Hydraulikzylinder 47 zugewandte Endstellung gefahren. Weiter wird der zweite Anschlagwinkel 43 so weit in Längsrichtung 11 verfahren, dass der Rohling 12 durch die Ringbrause 66 und den Induktor 64 in die Aufnahmeausnehmung 49 des Hydraulikzylinders 47 eingeführt werden kann. Nach dem Einführen des Rohlings 12 werden die Stützrollen 60; 61 und der zweite Anschlagwinkel 43 in Eingriff mit dem Rohling 12 gebracht. Anschließend wird der Induktor 64 in den zweiten Längsbereich (Fig. 2; Nr. 14) verfahren und mit Wechselstrom beschickt, so dass sich der Rohling auf Schmiedetemperatur erwärmt. Während des Erwärmens wird der Rohling 12 durch die angetriebene Stützrolle 63 in Drehbewegung versetzt, so dass die Erwärmung rotationssymmetrisch erfolgt. Weiter wird während des Erwärmens Kühlwasser 67 durch die Ringbrause 66 auf den Rohling 12 gespritzt, so dass sich der Rohling 12 neben dem ersten Längsbereich nicht unnötig erwärmt.

Nach Abschluss der Erwärmung wird der Drehantrieb der angetriebenen Stützrolle 63 stillgesetzt. Der Induktor 65 verbleibt an seiner Längsposition, wobei die Ringbrause 66 weiter aktiv bleibt, um den Rohling 12 zu kühlen. Sodann wird der Hydraulikzylinder 47 ausgefahren, damit sich der Abstand zwischen dem ersten und dem zweiten Anschlag 45; 46 in Längsrichtung 11 verkürzt, wodurch sich der Rohling 12 im ersten Längsbereich (Fig. 2; Nr. 14) aufwölbt. Der Induktor 64 ist dabei mit einem so großen Durchmesser ausgeführt, dass er den verformten Rohling 12 nicht berührt. Danach wird die Ringbrause 66 abgeschaltet und der Rohling 12 wird mit dem Induktor 64 für beispielsweise 5 s auf eine Glühtemperatur von 750 °C erwärmt, während er mit der angetriebenen Stützrolle 63 in Drehbewegung versetzt wird. Danach wird der Rohling 12 aus der Vorrichtung 40 entnommen und auf Umgebungstemperatur abgekühlt, so dass die Span abhebende Endbearbeitung, beispielsweise auf einer Drehmaschine, stattfinden kann.

Fig. 2 zeigt eine grobschematische Seitenansicht des Rohlings 12 nach der plastischen Verformung im ersten Längsbereich 14. Der Rohling 12 ist über seine gesamte Länge mit einer schraubenförmigen Nut 13 versehen, wobei in Fig. 2 ebenso wie in Fig. 1 und Fig. 3 aus Vereinfachungsgründen nur der erste und der letzte Nutumlauf dargestellt ist. In Fig. 2 ist die aufgewölbte Form des Rohlings 12 nach dem Stauchvorgang zu erkennen. Diese Form ergibt sich allein aus der Temperaturverteilung nach dem Erwärmen und dem Weg, den der erste und der zweite Anschlag aufeinander zu bewegt werden.

Als schmale Strichpunktlinie ist Endform 16 dargestellt, die mit einer Span abhebenden Bearbeitung hergestellt wird. Die Endform 16 umfasst einen Lagersitz 18 mit einer Anschlagkante 19 und einen Antriebszapfen 20. Der Lagersitz 18 weist insbesondere im Bereich der Anschlagkante 19 einen größeren Durchmesser als der Rohling 12 im Ausgangszustand auf. Die Endform 16 liegt vollständig innerhalb der aufgewölbten Form des Rohlings 12. Ausgenommen hiervon ist nur der Bereich 15, in dem ein Rest der schraubenförmigen Nut 13 an der Gewindespindel verbleibt.

In Fig. 2 ist weiter zu erkennen, dass der Antriebszapfen 20 einen Durchmesser aufweist, der kleiner als der Durchmesser des Rohlings 12 im Ausgangszustand ist. Dieser Bereich muss daher nicht erwärmt werden und kann daher problemlos in der Aufnahmeausnehmung (Fig. 1; Nr. 49) des Hydraulikzylinders aufgenommen werden, um den Rohling 12 quer zur Längsrichtung 11 abzustützen.

Fig. 3 zeigt eine grobschematische Seitenansicht eines Gewindetriebs 30 mit einer Gewindespindel 10, die nach dem erfindungsgemäßen Verfahren hergestellt ist. Die Gewindespindel 10 ist von einer hülsenförmigen Kugelgewindemutter 34 umgeben, die über endlos umlaufende kugelförmige Wälzkörper in Schraubeingriff mit der Gewindespindel 10 steht. An der in Fig. 3 linken Seite ist ein konventionell hergestellter erster Lagersitz 17 für ein erstes Radialwälzlager 32 vorgesehen. Der erste Lagersitz 17 ist hierbei mit einer Drehmaschine unmittelbar in die unverformte Gewindespindel 10 eingearbeitet.

Auf der gegenüberliegenden Seite ist der erfindungsgemäße zweite Lagersitz 18 vorgesehen, der einen größeren Durchmesser aufweist als der Rohling im Ausgangszustand. Das entsprechende zweite Radialwälzlager 33 kann beispielsweise als Schrägkugellager ausgeführt sein, damit es die vom Gewindetrieb 30 erzeugten Längskräfte auf die übergeordnete Baugruppe 31 übertragen kann. Die Gewindespindel 10 ist hierfür mit einer Anschlagkante 19 ausgestattet, die in den erfindungsgemäß aufgewölbten Bereich eingearbeitet wurde. Im Übrigen wurde auf die Darstellung weiterer Geometrien zur Festlegung der Radialwälzlager 32; 33 in Längsrichtung 11 verzichtet.

Hinzuweisen ist noch auf den Antriebszapfen 20, über den die Gewindespindel 10 mittels einer Kupplung mit einem Elektromotor oder einem Getriebe in Drehantriebsverbindung gebracht werden kann.

Hinzuweisen ist außerdem auf den durch das erfindungsgemäße Verfahren erzeugten Übergangsbereich 21, der weder für die tragende schraubenförmige Nut 13 noch für den zweiten Lagersitz 18 nutzbar ist.

### Bezugszeichenliste

- 11: 10 Gewindespindel Längsrichtung
- 12: Rohling
- 13: schraubenförmige Nut
- 14: erster Längsbereich
- 15: Bereich, in dem ein Rest der Nut stehen bleibt
- 16: Endform
- 17: erster Lagersitz
- 18: zweiter Lagersitz
- 19: Anschlagkante
- 20: Antriebszapfen
- 21: Übergangsbereich

- 30: Gewindetrieb
- 31: übergeordnete Baugruppe
- 32: erstes Radialwälzlager
- 33: zweites Radialwälzlager
- 34: Kugelgewindemutter

- 40: Vorrichtung
- 41: Grundgestell
- 42: erster Anschlagwinkel
- 43: zweiter Anschlagwinkel
- 44: Anschlagfläche
- 45: erster Anschlag
- 46: zweiter Anschlag
- 47: Hydraulikzylinder
- 48: Kolbenstange
- 49: Aufnahmeausnehmung
- 60: erste Gruppe von Stützrollen
- 61: zweite Gruppe von Stützrollen
- 62: Drehachse der Stützrolle
- 63: angetriebene Stützrolle
- 64: Induktor
- 65: Wechselstromquelle
- 66: Ringbrause
- 67: Kühlfluid

## Patentansprüche

1. Verfahren zur Herstellung einer Gewindespindel (10) umfassend die Schritte:
- Bereitstellen eines sich in eine Längsrichtung (11) erstreckenden Rohlings (12) aus Stahl, der an seiner Außenumfangsfläche im Wesentlichen über seine gesamte Länge mit wenigstens einer schraubförmigen Nut (13) versehen ist;
- Erwärmen eines ersten Längsbereichs (14) des Rohlings (12) mit der wenigstens einen schraubeförmigen Nut (13), so dass die für die plastische Umformung des Rohlings im ersten Längsbereich (14) erforderliche Kraft unter die für die plastische Umformung des Rohlings (12) bei Umgebungstemperatur erforderliche Kraft herabgesetzt ist;
- Längsfestes Einspannen des Rohlings (12) zwischen einem ersten und einem zweiten Anschlag (45; 46), wobei die Relativstellung des ersten und des zweiten Anschlags (45; 46) in Längsrichtung (11) so verstellt wird, dass deren Abstand sich verkürzt, so dass sich der erste Längsbereich (14) radial bezüglich der Längsrichtung (11) aufwölbt;
- Abkühlen des Rohlings (12) auf Umgebungstemperatur;
- Span abhebende Bearbeitung des Rohlings (12) im Bereich des radial aufgewölbten ersten Längsbereichs (14) auf die gewünschte Endform.

2. Verfahren nach Anspruch 1,
**dadurch gekennzeichnet, dass** der erste Längsbereich (14) beabstandet zu dem ersten und dem zweiten Anschlag (45; 46) angeordnet ist.

3. Verfahren nach einem der vorstehenden Ansprüche,
**dadurch gekennzeichnet, dass** der erste Längsbereich (14) des Rohlings (12) mit einem Wechselstrom induktiv erwärmt wird, der ringförmig um den Rohling (12) herum geführt ist.

4. Verfahren nach einem der vorstehenden Ansprüche,
**dadurch gekennzeichnet, dass** sich der Rohling (12) während des Erwärmens bezüglich der Längsrichtung (11) dreht.

5. Verfahren nach einem der vorstehenden Ansprüche,
**dadurch gekennzeichnet, dass** der Rohling (12) während des Erwärmens und/oder des Umformens in Längsrichtung (11) vor und/oder hinter dem ersten Längsbereich (14) gekühlt wird, indem er mit einem Kühlfluid besprüht wird.

6. Verfahren nach einem der vorstehenden Ansprüche,
**dadurch gekennzeichnet, dass** der Rohling (12) während der Relativbewegung des ersten und des zweiten Anschlags (45; 46) bezüglich der Längsrichtung (11) drehfest ist.

7. Verfahren nach einem der vorstehenden Ansprüche,
**dadurch gekennzeichnet, dass** im ersten Längsbereich (14) nach der Span abhebenden Bearbeitung ein Rest der schraubenförmigen Nut (13) verbleibt.

8. Verfahren nach einem der vorstehenden Ansprüche,
**dadurch gekennzeichnet, dass** der Rohling (12) im ersten Längsbereich (14) vor dem Abkühlen auf Umgebungstemperatur einer Glühbehandlung unterzogen wird, indem er für einen Zeitraum von 1 s bis 10s auf eine Temperatur von 750 °C bis 800 °C erwärmt wird.

9. Verfahren nach Anspruch 8,
**dadurch gekennzeichnet, dass** sich der Rohling (12) während der Glühbehandlung bezüglich der Längsrichtung (11) dreht.

10. Verfahren nach Anspruch 8 oder 9,
**dadurch gekennzeichnet, dass** die Glühbehandlung mit der gleichen Vorrichtung (40) durchgeführt wird, mit der der Rohling (12) zuvor erwärmt wurde.

11. Verfahren nach einem der vorstehenden Ansprüche,
**dadurch gekennzeichnet, dass** nacheinander am gleichen Rohling (12) mehrere Verfahren nach einem der vorstehenden Ansprüche durchgeführt werden, wobei die entsprechenden ersten Längsbereiche (14) in Längsrichtung (11) unmittelbar benachbart angeordnet sind.

12. Verfahren nach einem der vorstehenden Ansprüche,
**dadurch gekennzeichnet, dass** die wenigstens eine schraubenförmige Nut (13) des Rohlings (12) im Gewinderollverfahren hergestellt wird.

## Claims

1. Process for producing a threaded spindle (10), comprising the following steps:
- a steel blank (12) which extends in a longitudinal direction (11) and is provided on its outer circumferential surface with at least one helical groove (13) substantially over its entire length is provided;
- a first longitudinal region (14) of the blank (12) with the at least one helical groove (13) is heated, such that the force required for the plastic deformation of the blank in the first longitudinal region (14) is reduced to below the force required for the plastic deformation of the blank (12) at ambient temperature;
- the blank (12) is clamped in a longitudinally fixed manner between a first and a second stop (45; 46), wherein the relative position of the first and of the second stop (45; 46) in the longitudinal direction (11) is adjusted in such a way that the distance between them is shortened, such that the first longitudinal region (14) bulges radially with respect to the longitudinal direction (11);
- the blank (12) is cooled to ambient temperature;
- the blank (12) is subjected to material-removing machining in the region of the radially bulged, first longitudinal region (14) to the desired end form.

2. Process according to Claim 1,
**characterized in that** the first longitudinal region (14) is arranged at a distance from the first and the second stop (45; 46).

3. Process according to either of the preceding claims,
**characterized in that** the first longitudinal region (14) of the blank (12) is heated inductively with an alternating current, which is guided annularly around the blank (12).

4. Process according to one of the preceding claims,
**characterized in that** the blank (12) rotates with respect to the longitudinal direction (11) during the heating operation.

5. Process according to one of the preceding claims,
**characterized in that** the blank (12) is cooled upstream and/or downstream of the first longitudinal region (14) in the longitudinal direction (11) during the heating operation and/or the deformation operation by being sprayed with a cooling fluid.

6. Process according to one of the preceding claims,
**characterized in that** the blank (12) is rotationally fixed with respect to the longitudinal direction (11) during the relative movement of the first and of the second stop (45; 46).

7. Process according to one of the preceding claims,
**characterized in that** a remnant of the helical groove (13) remains in the first longitudinal region (14) after the material-removing machining.

8. Process according to one of the preceding claims,
**characterized in that** the blank (12) is subjected to an annealing treatment in the first longitudinal region (14) before the operation of cooling to ambient temperature by being heated to a temperature of 750°C to 800°C for a period of time of 1 s to 10 s.

9. Process according to Claim 8,
**characterized in that** the blank (12) rotates with respect to the longitudinal direction (11) during the annealing treatment.

10. Process according to Claim 8 or 9,
**characterized in that** the annealing treatment is carried out using the same apparatus (40) as that which was used to previously heat the blank (12).

11. Process according to one of the preceding claims,
**characterized in that** a plurality of processes according to one of the preceding claims are carried out in succession on the same blank (12), wherein the corresponding first longitudinal regions (14) are arranged so as to be directly adjacent in the longitudinal direction (11).

12. Process according to one of the preceding claims,
**characterized in that** the at least one helical groove (13) of the blank (12) is produced using a thread rolling process.

## Revendications

1. Procédé de fabrication d'une broche filetée (10), comprenant les étapes suivantes:
- préparer une ébauche (12) en acier s'étendant dans une direction longitudinale (11), qui est munie d'au moins une rainure hélicoïdale (13) essentiellement sur toute sa longueur sur sa surface périphérique extérieure;
- chauffer une première zone longitudinale (14) de l'ébauche (12) avec ladite au moins une rainure hélicoïdale (13), de telle manière que la force nécessaire pour la déformation plastique de l'ébauche dans la première zone longitudinale (14) soit abaissée en dessous de la force nécessaire pour la déformation plastique de l'ébauche (12) à la température ambiante;
- serrer fixement en longueur l'ébauche (12) entre une première et une deuxième butées (45; 46), dans lequel la position relative de la première et de la deuxième butées (45; 46) dans la direction longitudinale (11) est réglée de sorte que leur distance se raccourcisse, de telle manière que la première zone longitudinale (14) s'incurve radialement par rapport à la direction longitudinale (11);
- refroidir l'ébauche (12) à la température ambiante;
- usiner par enlèvement de copeaux l'ébauche (12) dans la région de la première zone longitudinale incurvée radialement (14) jusqu'à la forme finale désirée.

2. Procédé selon la revendication 1, **caractérisé en ce que** la première zone longitudinale (14) est disposée à distance de la première et de la deuxième butées (45; 46).

3. Procédé selon l'une quelconque des revendications précédentes, **caractérisé en ce que** l'on chauffe par induction la première zone longitudinale (14) de l'ébauche (12) avec un courant alternatif, qui est conduit sous forme annulaire autour de l'ébauche (12).

4. Procédé selon l'une quelconque des revendications précédentes, **caractérisé en ce que** l'ébauche (12) tourne par rapport à la direction longitudinale (11) pendant le chauffage.

5. Procédé selon l'une quelconque des revendications précédentes, **caractérisé en ce que** l'on refroidit l'ébauche (12) pendant le chauffage et/ou la déformation avant et/ou après la première zone longitudinale (14) dans la direction longitudinale (11), par le fait qu'on l'arrose avec un fluide de refroidissement.

6. Procédé selon l'une quelconque des revendications précédentes, **caractérisé en ce que** l'ébauche (12) est calée en rotation par rapport à la direction longitudinale (11) pendant le mouvement relatif de la première et de la deuxième butées (45; 46).

7. Procédé selon l'une quelconque des revendications précédentes, **caractérisé en ce qu'**il subsiste un reste de la rainure hélicoïdale (13) dans la première zone longitudinale (14) après l'usinage par enlèvement de copeaux.

8. Procédé selon l'une quelconque des revendications précédentes, **caractérisé en ce que** l'on soumet l'ébauche (12) à un traitement de recuit dans la première zone longitudinale (14) avant le refroidissement à la température ambiante, par le fait qu'on la chauffe pendant une durée de 1 s à 10 s à une température de 750°C à 800°C.

9. Procédé selon la revendication 8, **caractérisé en ce que** l'ébauche (12) tourne par rapport à la direction longitudinale (11) pendant le traitement de recuit.

10. Procédé selon la revendication 8 ou 9, **caractérisé en ce que** l'on effectue le traitement de recuit avec le même dispositif (40), avec lequel l'ébauche (12) a été antérieurement chauffée.

11. Procédé selon l'une quelconque des revendications précédentes, **caractérisé en ce que** l'on effectue l'un après l'autre sur la même ébauche (12) plusieurs fois le procédé selon l'une quelconque des revendications précédentes, dans lequel les premières zones longitudinales correspondantes (14) sont disposées directement l'une à côté de l'autre dans la direction longitudinale (11).

12. Procédé selon l'une quelconque des revendications précédentes, **caractérisé en ce que** l'on réalise ladite au moins une rainure hélicoïdale (13) de l'ébauche (12) par un procédé de roulage de filets.
